# EUROPEAN PATENT SPECIFICATION

(11) **EP 3 814 178 B1**
(45) Date of publication and mention of the grant of the patent: **22.10.2025**
(21) Application number: 19827220.5
(22) Date of filing: 18.06.2019
(51) Int. Cl.: B60S 1/58, B60S 1/48, B60S 1/08

(54) **A WIPER SYSTEM AND A MOTOR VEHICLE COMPRISING THE WIPER SYSTEM**
WISCHERSYSTEM UND KRAFTFAHRZEUG MIT DEM WISCHERSYSTEM
SYSTÈME D'ESSUIE-GLACE ET VÉHICULE AUTOMOBILE COMPRENANT LE SYSTÈME D'ESSUIE-GLACE

(30) Priority: 28.06.2018 CN 201810686935
(43) Date of publication of application: 05.05.2021
(73) Proprietor: Valeo Systèmes d'Essuyage, 78322 Le Mesnil Saint Denis (FR)
(72) Inventor: MENEGUZ, Raphael, 80517 80517 La Verrière (FR); KAPITZA, Harald, 74321 Bietigheim-Bissingen (DE); XU, Jing, Shanghai 200233 (CN); JI, Chunliang, Changshu, Jiangsu 215500 (CN)
(74) Representative: Valeo Visibility
(86) International application number: PCT/CN2019/091644
(87) International publication number: WO 2020/001316

(56) References cited:
- WO-A1-2009/141245
- WO-A1-2009/141275
- WO-A1-2012/076562
- WO-A1-2016/008680
- CN-A- 105 465 000
- CN-A- 106 536 297
- CN-A- 107 107 871
- DE-A1- 3 743 520
- FR-A1- 2 927 295

## Description

### FIELD OF INVENTION

The present disclosure relates to a wiper system, more particularly to a wiper system comprising a first washer system and a second washer system controlled by a bidirectional pump and allow the first washer system and the second washer system be controlled separately.

### BACKGROUND

A washer system is normally incorporated in a wiper system in a vehicle such as a motor vehicle Such a wiper system includes a wiper means for wiping the windscreen of the vehicles such as a front windscreen and a rear windscreen with washing agent(liquid or powder) sprayed thereon by a washer system. The wiper means generally includes two wiper arms each having a wiper blade in sliding contact with the windscreen.

If the washing liquid continuously spraying on the windscreen of the vehicle during reciprocating movement of the wiper arm, it may strike on the wiper means and scatter over a wide area of window, which may result in economy penalty of the washing liquid and may have a negative effect for the clear view of the driver.

In order to allow the washing agent to be sprayed according to the angular position of the wiper means, a wiper system may further includes a washer switch module to open or close depending on the angular position of the wiper means to cooperate the activation of the pump for the washer system with the reciprocating movement of the wiper means.

However, it is not desired that the washer system for the rear windscreen sprays washing agent according to the angular position of the wiper means on the front windscreen. Therefore, it is necessary to control the spaying of the washer system for the front windscreen and the rear windscreen separately.

A traditional control device for this purpose is a control system that is independent of the wiper system, which on the one hand reduces the integration of the system, on the other hand it also renders a less compact product structure and poor efficiency of space utilization.

In another patent application PCT/CN2018/074705 submitted by Changshu Valeo Automotive Wiper Systems Co., LTD, a unidirectional unit integrated into a wiper system is proposed, such as a diode, which is connected in parallel with washer switch module and is configured to selectively bypass the washer switch module depending on the polarity of the voltage applied by the washer power module.

The document WO 2016/008680 A1 discloses another control device for a wiper system, as known in the art.

There is still room for improvement in such a unidirectional unit, which is manifested in the significant heat generated by the diode. As a result, the diode may have to be equipped with a heat sink, which increases the volume and cost of the product.

### SUMMARY OF THE INVENTION

The present invention aims to at least remedy the aforementioned drawbacks and propose a wiper system that is compact in construction and low in cost.

The invention relates to a wiper system for a motor vehicle, comprising: a wiper means configured to wipe a windscreen of the motor vehicle, a first washer system and a second washer system configured to spray washing agent, a bidirectional pump configured to pump the washing agent to the first washer system upon rotating in a first direction and to pump the washing agent to the second washer system upon rotating in a second direction, a washer power module configured to selectively apply a positive voltage or negative voltage to the bidirectional pump so that the bidirectional pump rotates in the first direction or the second direction respectively, a washer switch module connected in series with the washer power module and the bidirectional pump and configured to open or close depending on the angular position of the wiper means so that the first washer system sprays or stop spraying the washing agent, and a trigger switch module connected in parallel with the washer switch module and configured to be turned off when triggered by a signal, so that the spraying of the first washer system cooperates with the angular position of the wiper means , or to be turned on when triggered by a signal, so that the spraying of the second washer system is independent of the angular position of the wiper means.

Hereby, a separate control of the spraying of the first washer system and the second washer system can be achieved. In addition, compared to a separate control system, the trigger switch module is implemented as a sub-module of the wiper system, which can help car manufacturers downsize of the full package and decrease the number of subsystems, which can reduce the cost of the wiper system and even the entire vehicle.

According to some embodiments of the invention, the trigger switch module is triggered by a current or voltage signal. Compared with the solution of utilizing a diode to bypass the washer switch module, the trigger switch module has higher stability and reliability, and avoids the adverse effect caused by the significant thermal effect of the diode.

When the washer power module applies a positive voltage to the bidirectional pump, the bidirectional pump rotates in the first direction, and the washing agent is intermittently sprayed by the first washer system according to the angular position of the wiper means. This allows the activation of the pump of the wiper system, in other words the spraying of washing agent through the first washer system cooperates with the reciprocating movement of the wiper means.

When the washer power module applies a negative voltage to the bidirectional pump, the bidirectional pump rotates in the second direction, and the washing agent is sprayed by the second washer system regardless of the angular position of the front wiper means. This prevents the second washer system from intermittently spraying the washing agent in cooperation with the reciprocating movement of the first wiper device at the first windscreen, the second washer system instead continuously sprays the washing agent.

According to an unclaimed example, the trigger switch module is a relay. In this case, the trigger signal that triggers the trigger switch module is a current signal.

According to the invention, the trigger switch module comprises a first end connected to the first voltage terminal of the washer power module and a second end connected to one end of the bidirectional pump, the trigger switch module is turned on when the first voltage terminal is at a high potential. In this case, the trigger signal that triggers the trigger switch module is a voltage signal.

The trigger switch module comprises a third end connected to the second voltage terminal of the washer power module.

According to the invention, the trigger switch module may comprise a transistor of the metal-oxide semiconductor field effect transistor (MOSFET) type, a source , a gate , and a drain of the transistor are respectively connected to the second end, the third end and the first end of the trigger switch module.

Preferably, the trigger switch module may comprise a Zener diode connected between the second end and the third end of the trigger switch module.

Preferably, the wiper system further comprises a body control module which allows the washer power module to apply a positive or negative voltage to the bidirectional pump according to a driver's instruction or a signal received from a sensor of the motor vehicle.

The invention also relates to a motor vehicle comprising the above-described wiper system.

### BRIEF DESCRIPTION OF THE DRAWINGS

The disclosure can be better understood with reference to the flowing drawings and description. The components in the drawings are not necessarily to scale, emphasis instead being placed upon illustrating the principles of the disclosure. Moreover, in the figures, like reference numerals designate like components throughout the different views.
FIG. 1 is a schematic view showing a wiper system according to an embodiment of the present invention;
FIG. 2 is a schematic view illustrating a front washer pumping circuit of a wiper system including a relay according to an unclaimed example,
FIG. 3 is a schematic view illustrating a rear washer pumping circuit of a wiper system including a relay according to an unclaimed example,
FIG. 4 is a schematic view showing a wiper system including a transistor according to the invention;

### BRIEF DESCRIPTION OF THE PREFERRED EMBODIMENTS

Hereinafter, the preferred embodiment of the present invention will be described in more detail with reference to the accompanying drawings. In the following description of the present invention, a detailed description of known functions and configurations incorporated herein will be omitted when it may make the subject matter of the present invention rather unclear.

The terms used herein are used to describe the embodiments and are not intended to limit and/or restrict the present disclosure.

The terms used herein are used to describe the embodiments and are not intended to limit and/or restrict the present disclosure.

It should be noted that, the singular forms "a," "an" and "the" are intended to include the plural forms as well, unless the context clearly indicates otherwise.

Also, it will be understood that, although the terms "first", "second" etc. may be used herein to describe various elements, but elements are not limited by these terms. These terms are only used to distinguish one element from another element.

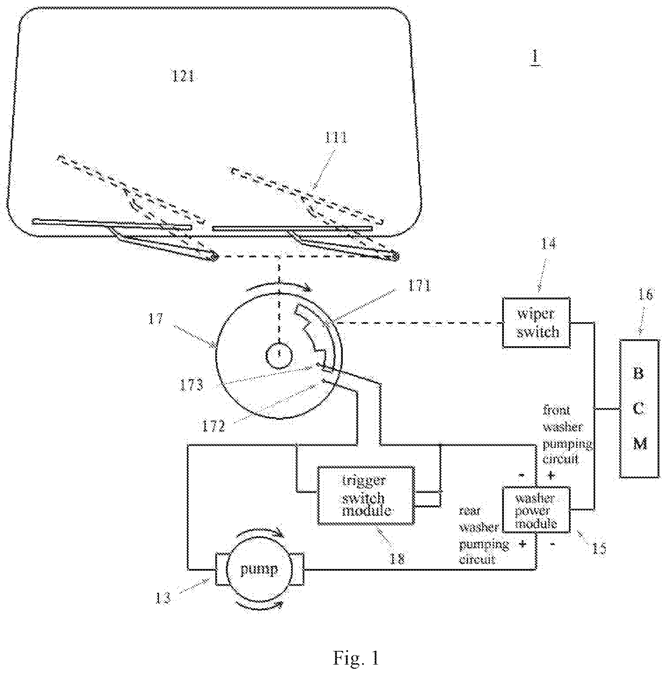

Referring to Fig. 1 illustrating a conventional wiper system 1 of a motor vehicle, the system 1 comprises a wiper means having two wiper arms each provided with a wiper blade at its free end for wiping the windscreen of the vehicles. A wiper motor (not shown) is configured to drive the wiper means via a linkage unit (not shown) converting the rotation movement of the wiper motor into the reciprocating movement of the wiper arms. A washer system (not shown) is configured to spray washing agent (liquid or powder) on the windscreen. A pump 13 is connected to a reservoir of washing liquid and configured to supply washing agent to the wiper means. A wiper switch 14 is configured to control the power supply of the wiper means. A washer power module 15 configured to control the power supply of the pump 13. A body control module (UCM) 16 is configured to control the wiper switch 14 and the washer power module 15 for example according to the command from the users and the signals received from various sensors.

According to an embodiment of the present disclosure, the wiper means 11 may further include a front wiper means 111 for the front windscreen 121 and a rear wiper means for the rear windscreen (not shown). The wiper motor may include a front wiper motor (not shown) to drive the front wiper means and the rear wiper motor (not shown) to drive the rear wiper means. The washer system may include a front washer system (not shown) and a rear washer system (not shown), each including a pipe and a nozzle connected to the pump 13 via the pipe and able to deliver a jet of washing liquid on the front windscreen and the rear windscreen. The washer power module 15 may apply a positive voltage or a negative voltage to the pump 13 in response to a signal received from UCM of the motor vehicle. The pump 13 may be a bidirectional pump which is able to rotate in two directions As an example, when the pump 13 is supplied with the positive voltage through the washer power module 15, it rotates in a first direction so that the front washer system sprays washing agent and when the pump 13 is supplied with the negative voltage through the washer power module 15, it rotates in a second direction opposite to the first direction so that the rear washer system sprays washing agent. A wiper switch 14 is configured to control the power supply of the front wiper means 111 and the rear wiper means. A washer power module 15 configured to control the power supply of the pump 13, especially the electrical polarity of the power supply.

According to an embodiment of the present disclosure, in order to control the spraying of the washing agent as desired, a wiper system 1 may further include a washer switch module 17 connected in series with the wiper switch 14 and the pump 13. The washer switch module 17 includes a cam mounted on a wheel configured to rotate with the rotation of a wiper motor driving the wiper means 11 and two stationary contacts 172, 173 such us spring contacts, fixed to face the cam and connected to the washer power module the pump 13 respectively. As an example, the wheel may be in concentric rotation with a output shaft of the wiper motor which drives the reciprocating movement of the wiper means 11, and thus the angular position of the wheel corresponds to the angular position of the wiper means 11. The cam has a conductive track 171 in concentric to the wheel which is able to connection or disconnect the two stationary contacts 172, 173 depending on the angular position of the wiper means 11 so as to allow the washer switch module 17 open or close depending on the angular position of the wiper means 11.

When the pump 13 is a bidirectional pump rotating in two direction, the pump 13 is used for both the front windscreen and the rear windscreen. It is not desired that both the front washer system for the front windscreen and the rear washer system for the rear windscreen are controlled by a washer switch module 17 configured to open or close depending on the angular position of one wiper means. Particularly, in the case where the one wiper means is the front wiper means, it is not desired to control the rear washer system according to the angular position of the front wiper means.

Thus, it may be necessary to control the front washer system and the rear washer system separately. In particularly, it may be necessary to control the front washer system according to the angular position of the front wiper means and to control the rear washer system regardless of the angular position of the front wiper means.

To address the above issue, the wiper system 1 may further include a trigger switch module 18 connected in parallel with the washer switch module 17 and configured to be turned on by a voltage or current signal.

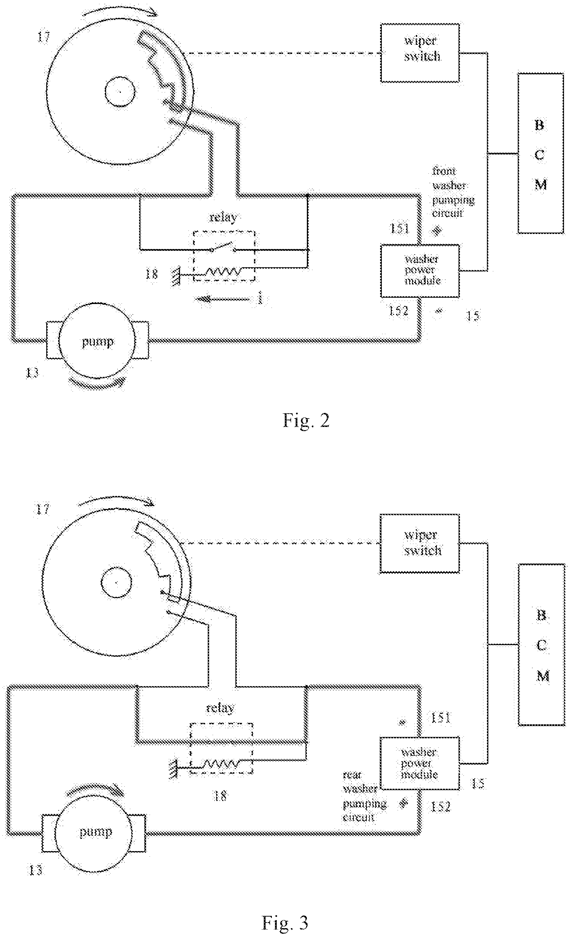

FIGS. 2 and 3 illustrate one unclaimed example of a trigger switch module 18. In this embodiment, the trigger switch module 18 is a relay. As an example, the coil portion of the relay is grounded at one end and is connected to the first voltage terminal 151 of the washer power supply module 15 at the other end. When the first voltage terminal 151 is at a high potential, the armature portion of the relay can be brought into the open position from the closed position as a result of the current i passing the coil portion, so that the relay is in an open state.

As shown in FIG. 2, the washer power module 15 applies a positive voltage to the bidirectional pump 13, the first voltage terminal 151 of the washer power module 15 is at a high potential, the second voltage terminal 152 is at a low potential, and a current i passes through the coil portion of the relay, the armature portion of the relay enters the open position from the closed position and the relay is disconnected. Thus, the washer power supply module 15, the pump 13, and the washer switch module 17 constitute a closed circuit, i.e., a front washer pumping circuit (as shown in bold lines in FIG. 2). In this case, the bidirectional pump 13 rotates in the first direction, and the washing agent is intermittently sprayed by the front washer system according to the angular position of the front wiper means.

As shown in FIG. 3, the washer power module 15 applies a negative voltage to the bidirectional pump 13, the first voltage terminal 151 of the washer power module 15 is at a low potential, the second voltage terminal 152 is at a high potential, and no current passes through the coil portion of the relay, the armature portion of the relay remains in a closed position and the relay is connected. Thus, the washer power supply module 15, the pump 13, and relay constitute a closed circuit, i.e., a rear washer pumping circuit (as shown in bold lines in FIG. 3). In this case, the bidirectional pump 13 rotates in the second direction, and the washing agent is continuously sprayed by the rear washer system regardless of the angular position of the front wiper means.

It is conceivable that, in addition to the normally closed type of relay described above, for example, a normally open type relay may also be provided.

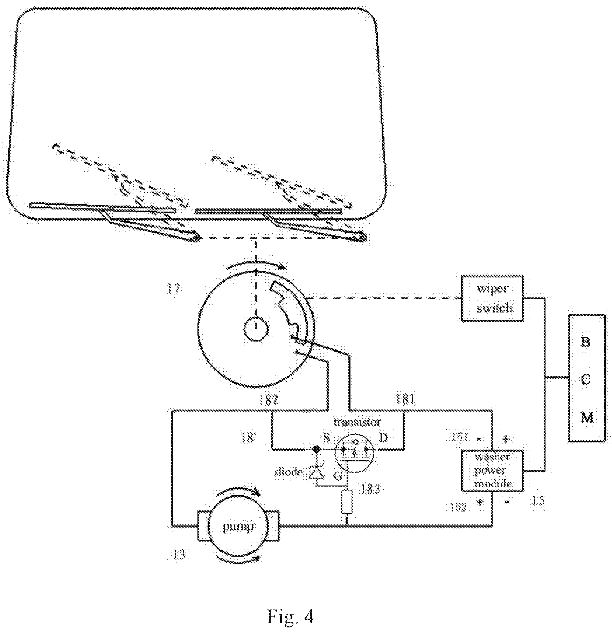

FIG. 4 shows another embodiment of a trigger switch module 18. In this embodiment, the trigger switch module 18 includes, for example a transistor of the metal-oxide semiconductor field effect transistor (MOSFET) type. The trigger switch module 18 may have three ends, wherein the first end 181 is connected to the first voltage terminal 151 of the washer power module 15, the second end 182 is connected to one end of the bidirectional pump 13, and the third end 183 is connected to the second voltage terminal 152 of the washer power module. As an example, the field effect transistor is of the P-channel type, the source S of the transistor is connected to the second end 182 of the trigger switch module 18, the drain D of the transistor is connected to the first end 181 of the trigger switch module 18, and the gate G of the transistor is connected to the third end 183 of the trigger switch module 18. The trigger switch module may further include a Zener diode, an anode of the Zener diode is connected to the third end 183 of the trigger switch module 18, and a cathode of the Zener diode is connected to the second end 182 of the trigger switch module 18. The trigger switch module may also include a resistor, one end of which is connected to the anode of the Zener diode and the gate G of the transistor, and the other end is connected to the second voltage terminal 152 of the washer power module 15.

When the washer power module 15 applies a positive voltage to the bidirectional pump 13, the first voltage terminal 151 is at a high potential, the second voltage terminal 152 is at a low potential, and accordingly the gate G of the transistor is at a low potential, and the drain D is at a high potential, so that the transistor is turned on, and a current passes between the first end 181 and the second end 182 of the trigger switch module 18. The cathode of the Zener diode is at a high potential and the anode is at a low potential, and the Zener diode is thus reversed in breakdown. Thus, the washer power supply module 15, the pump 13, and the trigger switch module 18 constitute a closed circuit, i.e., a rear washer pumping circuit. In this case, the washing agent is continuously sprayed by the rear washer system regardless of the angular position of the wiper means.

When the washer power module 15 applies a negative voltage to the bidirectional pump 13, the first voltage terminal 151 is at a low potential, the second voltage terminal 152 is at a high potential, and accordingly the gate G of the transistor is at a high potential, and the drain D is at a low potential, so that the transistor is turned off, and no current passes between the first end 181 and the second end 182 of the trigger switch module 18. Thus, the washer power supply module 15, the pump 13, and the washer switch module 17 constitute a closed circuit, i.e., a front washer pumping circuit. In this case, the washing agent is intermittently sprayed by the front washer system according to the angular position of the front wiper means.

It is conceivable that in addition to the above-described P-channel type field effect transistors, for example N-channel type field effect transistors can also be provided.

Although a few embodiments of the present disclosure have been shown and described, it would be appreciated by those skilled in the art that changes may be made in these embodiments without departing from the principles and spirit of the disclosure, the scope of which is defined in the claims.

Although the present disclosure has been described with an exemplary embodiment, various changes and modifications may be suggested to one skilled in the art. It is intended that the present disclosure encompass such changes and modifications as fall within the scope of the appended claims.

## Claims

1. A wiper system (1) for a motor vehicle, comprising:
a wiper means (111) configured to wipe a windscreen (121) of the motor vehicle,
a first washer system and a second washer system configured to spray washing agent,
a bidirectional pump (13) configured to pump the washing agent to the first washer system upon rotating in a first direction and to pump the washing agent to the second washer system upon rotating in a second direction,
a washer power module (15) configured to selectively apply a positive voltage or negative voltage to the bidirectional pump (13) so that the bidirectional pump (13) rotates in the first direction or the second direction respectively,
a washer switch module (17) connected in series with the washer power module (15) and the bidirectional pump (13) and configured to open or close depending on the angular position of the wiper means (111) so that the first washer system sprays or stop spraying the washing agent, and
a trigger switch module (18) connected in parallel with the washer switch module (17) and configured to be turned off when triggered by a signal, so that the spraying of the first washer system cooperates with the angular position of the wiper means (111), or to be turned on when triggered by a signal, so that the spraying of the second washer system is independent of the angular position of the wiper means (111),
the trigger switch module (18) comprising a first end (181) connected to the first voltage terminal (151) of the washer power module (15) and a second end (182) connected to one end of the bidirectional pump (13), the trigger switch module (18) being turned on when the first voltage terminal (151) is at a high potential,
**characterized in that** the trigger switch module (18) further comprises a third end (183) connected to the second voltage terminal (152) of the washer power module (15).

2. The wiper system (1) according to Claim 1, the trigger switch module (18) is triggered by a current or voltage signal.

3. The wiper system (1) according to any one of the preceding claims, wherein the trigger switch module (18) comprises a transistor of the metal-oxide semiconductor field effect transistor (MOSFET) type, a source (S), a gate (G), and a drain (D) of the transistor are respectively connected to the second end (182), the third end (183) and the first end (181) of the trigger switch module (18).

4. The wiper system (1) according to any one of the preceding claims, wherein the trigger switch module (8) comprises a Zener diode connected between the second end (182) and the third end (183) of the trigger switch module (18).

5. A motor vehicle comprising the wiper system (1) according to any one of the preceding claims.

## Patentansprüche

1. Ein Wischer-System (1) für ein Kraftfahrzeug, umfassend:
eine Wischereinrichtung (111), die konfiguriert ist, eine Windschutzscheibe (121) des Kraftfahrzeugs zu wischen,
ein erstes Waschsystem und ein zweites Waschsystem, die konfiguriert sind, Waschmittel zu sprühen,
eine bidirektionale Pumpe (13), die konfiguriert ist, das Waschmittel zu dem ersten Waschsystem zu pumpen, wenn sie sich in einer ersten Richtung dreht, und das Waschmittel zu dem zweiten Waschsystem zu pumpen, wenn sie sich in einer zweiten Richtung dreht,
ein Waschleistungsmodul (15), das konfiguriert ist, selektiv eine positive Spannung oder eine negative Spannung an die bidirektionale Pumpe (13) anzulegen, so dass sich die bidirektionale Pumpe (13) jeweils in der ersten Richtung oder der zweiten Richtung dreht,
ein Waschschaltmodul (17), das in Reihe mit dem Waschleistungsmodul (15) und der bidirektionalen Pumpe (13) verbunden und konfiguriert ist, sich in Abhängigkeit von der Winkelposition der Wischereinrichtung (111) zu öffnen oder zu schließen, so dass das erste Waschsystem das Waschmittel sprüht oder das Sprühen stoppt, und
ein Triggerschaltmodul (18), das parallel zu dem Waschschaltmodul (17) verbunden und
konfiguriert ist, ausgeschaltet zu werden, wenn es durch ein Signal ausgelöst wird, so dass das Sprühen des ersten Waschsystems mit der Winkelposition der Wischereinrichtung (111) zusammenwirkt, oder eingeschaltet zu werden, wenn es durch ein Signal ausgelöst wird, so dass das Sprühen des zweiten Waschsystems unabhängig von der Winkelposition der Wischereinrichtung (111) ist,
wobei das Triggerschaltmodul (18) ein erstes Ende (181), das mit dem ersten Spannungsanschluss (151) des Waschleistungsmoduls (15) verbunden ist, und ein zweites Ende (182), das mit einem Ende der bidirektionalen Pumpe (13) verbunden ist, umfasst, wobei das Triggerschaltmodul (18) eingeschaltet wird, wenn der erste Spannungsanschluss (151) auf hohem Potential liegt,
**dadurch gekennzeichnet, dass** das Triggerschaltmodul (18) ferner ein drittes Ende (183) umfasst, das mit dem zweiten Spannungsanschluss (152) des Waschleistungsmoduls (15) verbunden ist.

2. Das Wischer-System (1) nach Anspruch 1, wobei das Triggerschaltmodul (18) durch ein Strom- oder Spannungssignal ausgelöst wird.

3. Das Wischer-System (1) nach einem der vorhergehenden Ansprüche, wobei das Triggerschaltmodul (18) einen Transistor vom Metall-Oxid-Halbleiter-Feldeffekttransistor (MOSFET)-Typ umfasst, wobei eine Source (S), ein Gate (G) und ein Drain (D) des Transistors jeweils mit dem zweiten Ende (182), dem dritten Ende (183) und dem ersten Ende (181) des Triggerschaltmoduls (18) verbunden sind.

4. Das Wischer-System (1) nach einem der vorhergehenden Ansprüche, wobei das Triggerschaltmodul (8) eine Zener-Diode umfasst, die zwischen dem zweiten Ende (182) und dem dritten Ende (183) des Triggerschaltmoduls (18) verbunden ist.

5. Ein Kraftfahrzeug, umfassend das Wischer-System (1) nach einem der vorhergehenden Ansprüche.

## Revendications

1. Un système d'essuie-glace (1) pour un véhicule automobile, comprenant :
un moyen d'essuie-glace (111) configuré pour essuyer un pare-brise (121) du véhicule automobile,
un premier système de lave-glace et un second système de lave-glace configurés pour pulvériser un agent de lavage,
une pompe bidirectionnelle (13) configurée pour pomper l'agent de lavage vers le premier système de lave-glace lors d'une rotation dans une première direction et pour pomper l'agent de lavage vers le second système de lave-glace lors d'une rotation dans une seconde direction,
un module de puissance de lave-glace (15) configuré pour appliquer sélectivement une tension positive ou une tension négative à la pompe bidirectionnelle (13) de sorte que la pompe bidirectionnelle (13) tourne dans la première direction ou la seconde direction respectivement,
un module de commutation de lave-glace (17) connecté en série avec le module de puissance de lave-glace (15) et la pompe bidirectionnelle (13) et configuré pour s'ouvrir ou se fermer en fonction de la position angulaire du moyen d'essuie-glace (111) de sorte que le premier système de lave-glace pulvérise ou cesse de pulvériser l'agent de lavage, et
un module de commutation de déclenchement (18) connecté en parallèle avec le module de commutation de lave-glace (17) et configuré pour être désactivé lorsqu'il est déclenché par un signal, de sorte que la pulvérisation du premier système de lave-glace coopère avec la position angulaire du moyen d'essuie-glace (111), ou pour être activé lorsqu'il est déclenché par un signal, de sorte que la pulvérisation du second système de lave-glace est indépendante de la position angulaire du moyen d'essuie-glace (111),
le module de commutation de déclenchement (18) comprenant une première extrémité (181) connectée à la première borne de tension (151) du module de puissance de lave-glace (15) et une seconde extrémité (182) connectée à une extrémité de la pompe bidirectionnelle (13), le module de commutation de déclenchement (18) étant activé lorsque la première borne de tension (151) est à un potentiel élevé,
**caractérisé en ce que** le module de commutation de déclenchement (18) comprend en outre une troisième extrémité (183) connectée à la seconde borne de tension (152) du module de puissance de lave-glace (15).

2. Le système d'essuie-glace (1) selon la revendication 1, le module de commutation de déclenchement (18) étant déclenché par un signal de courant ou de tension.

3. Le système d'essuie-glace (1) selon l'une quelconque des revendications précédentes, dans lequel le module de commutation de déclenchement (18) comprend un transistor de type transistor à effet de champ à semi-conducteur à oxyde métallique (MOSFET), une source (S), une grille (G) et un drain (D) du transistor étant respectivement connectés à la seconde extrémité (182), à la troisième extrémité (183) et à la première extrémité (181) du module de commutation de déclenchement (18).

4. Le système d'essuie-glace (1) selon l'une quelconque des revendications précédentes, dans lequel le module de commutation de déclenchement (8) comprend une diode Zener connectée entre la seconde extrémité (182) et la troisième extrémité (183) du module de commutation de déclenchement (18).

5. Un véhicule automobile comprenant le système d'essuie-glace (1) selon l'une quelconque des revendications précédentes.
